# EUROPEAN PATENT APPLICATION

(11) **EP 2 961 126 A1**
(43) Date of publication of application: **30.12.2015**
(21) Application number: 14306012.7
(22) Date of filing: 26.06.2014
(51) Int. Cl.: H04L 29/06, H04L 29/08

(54) **Method, server, and system for synchronizing a plurality of devices**

(71) Applicant: Thomson Licensing, 92130 Issy-les-Moulineaux (FR)
(72) Inventor: De Vito, Mario, 35576 Cesson-Sévigné (FR); Bazire, Antony, 35760 Montgermont (FR); Morin, Thomas, 35576 Cesson-Sévigné (FR)
(74) Representative: Huchet, Anne

(57) **Abstract**

A method of synchronizing a plurality of devices in a server includes receiving a first request from a first device (S101); responding to the first request with a first response including a first refresh time, the first refresh time being calculated based on a first difference between a point in time when the first request is received and a point in time determined by the server (S101, S103); receiving a second request from a second device (S101); and responding to the second request with a second response including a second refresh time, the second refresh time being calculated based on a second difference between a point in time when the second request is received and the point in time determined by the server (S101, S103).

## Description

### TECHNICAL FIELD

The present disclosure relates generally to a method, a server, and a system for synchronizing a plurality of devices.

### BACKGROUND

When several terminals running a web browser are cooperating or simply involved in a common goal, there may be a need for these terminals to be synchronized with a common time reference. For example, a server sends a time controlled list of questions to a panel of persons. For each question on the list, every person has to provide an answer during the same time frame. At the end of the time dedicated to answering the current question, the server changes the page displayed on every terminal and goes to the next question.

In this manner, two or more users may wish to browse web pages in a synchronized way. To synchronize several terminals, a push mode can be used. A push mode allows a server to send a notification to a client terminal, initiated by the server. In the push mode, the server can push (i.e. send) a common page to a set of terminals at the same time. However, this solution requires implementation of the push mode on both sides and terminals configured to accept pushed pages.

Another solution is to install an application such as JavaScript on each terminal. This solution requires software development and a lot of testing to ensure that the application works cooperatively even with different types of terminals.

In addition, both of these solutions have an impact on the terminal security settings.

In order to solve the problems of these solutions, it is a general object of the present disclosure to synchronize a plurality of terminals or devices without an impact on the terminals or devices.

### SUMMARY

In one aspect of the present invention, there is provided a method of synchronizing a plurality of devices in a server, including:
receiving a first request from a first device;
responding to the first request with a first response including a first refresh time, the first refresh time being calculated based on a first difference between a point in time when the first request is received and a point in time determined by the server;
receiving a second request from a second device; and
responding to the second request with a second response including a second refresh time, the second refresh time being calculated based on a second difference between a point in time when the second request is received and the point in time determined by the server.

In another aspect of the present invention, there is provided a server for synchronizing a plurality of devices; including:
a reception unit configured to receive a first request from a first device and receive a second request from a second device; and
a response unit configured to respond to the first request with a first response including a first refresh time and respond to the second request with a second response including a second refresh time;
wherein the first refresh time is calculated based on a first difference between a point in time when the first request is received and a point in time determined by the server and the second refresh time is calculated based on a second difference between a point in time when the second request is received and the point in time determined by the server.

In another aspect of the present invention, there is provided a system for synchronizing a plurality of devices; including:
a first device configured to transmit a first request;
a second device configured to transmit a second request; and
a server configured to receive the first request from the first device and receive the second request from the second device, and to respond to the first request with a first response including a first refresh time and respond to the second request with a second response including a second refresh time;
wherein the first refresh time is calculated based on a first difference between a point in time when the first request is received and a point in time determined by the server and the second refresh time is calculated based on a second difference between a point in time when the second request is received and the point in time determined by the server.

### BRIEF DESCRIPTION OF DRAWINGS

These and other aspects, features and advantages of the present invention will become apparent from the following description in connection with the accompanying drawings in which:
Fig. 1 is a diagram illustrating a system according to an embodiment of the present invention;
Fig. 2 is a server for synchronizing a plurality of terminals according to an embodiment of the present invention;
Fig. 3 is a state transition diagram of a method of synchronizing a plurality of terminals in a server according to an embodiment of the present invention; and
Fig. 4 is a time chart illustrating that a plurality of terminals are synchronized according to an embodiment of the present invention.

### DESCRIPTION OF EMBODIMENTS

In the following description, various aspects of an embodiment of the present invention will be described. For the purpose of explanation, specific configurations and details are set forth in order to provide a thorough understanding. However, it will also be apparent to one skilled in the art that the present invention may be practiced without the specific details presented herein.

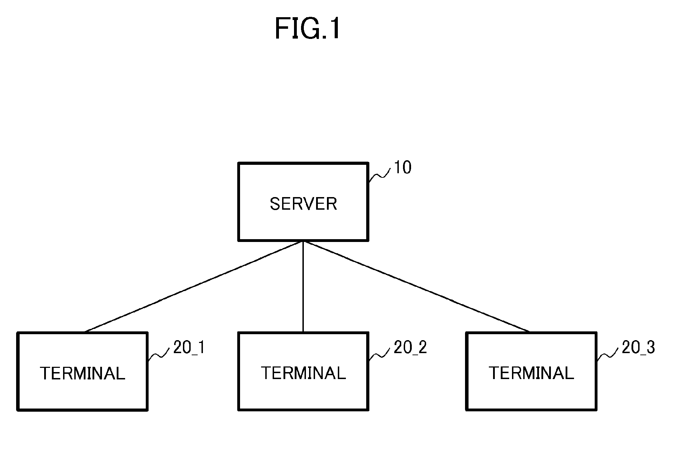

Fig. 1 shows a system according to an embodiment of the present invention. The system includes a server 10 and a plurality of terminals 20_1, 20_2, and 20_3. The server 10 is a web server which delivers a web page to terminals 20_1, 20_2, and 20_3 using HTTP (Hypertext Transfer Protocol). The web page may be written in HTML (Hypertext Markup Language). The terminal 20_1, 20_2, or 20_3 is any device in which a web browser is installed. The terminal 20_1, 20_2, or 20_3 may be any computing device such as a personal computer, a tablet computer, a smartphone, a mobile computing device, a cellular phone or the like, provided that it runs a web browser. The terminal 20_1, 20_2, or 20_3 receives the web page from the server 10 and displays the web page on the web browser.

In an embodiment of the present invention, the terminal 20_1, 20_2, or 20_3 receives or pulls the web page from the server 10 in a pull mode. A pull mode is a request-response model where a terminal running a web browser makes a request to a server, which then responds to the request. The response from the server may include a refresh time. When the terminal 20_1, 20_2, or 20_3 receives a response including a refresh time, the terminal will automatically makes a request to refresh the web page after the lapse of the refresh time. When appropriately setting the refresh time in the server 10, the terminals 20_1, 20_2, and 20_3 can be synchronized. The refresh time is calculated from the difference between the point in time of a terminal's page request and a point in time determined by the server 10. By sending to each of different terminals 20_1, 20_2, and 20_3 a response with an appropriate refresh time, the server 10 ensures that all the terminals 20_1, 20_2, and 20_3 will ask for a page refresh at the same point in time after an initialization phase as described below. In this manner, the same web page can be displayed on the terminals 20_1, 20_2, and 20_3 at the same time using only pulled pages from the server 10. It should be noted that the "same time" or "same point in time" as used herein may include some time differences short enough in comparison with the time responses of an application.

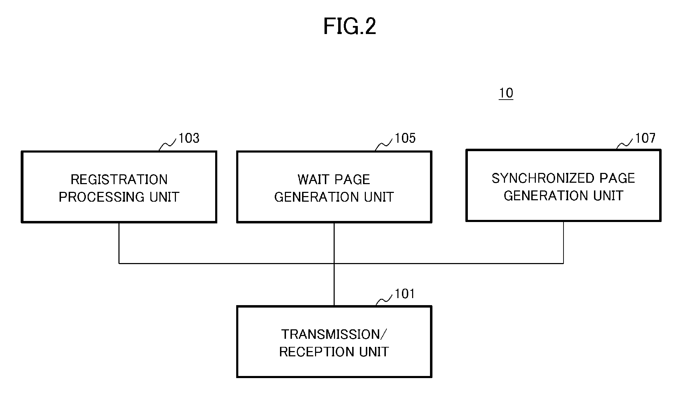

Fig. 2 shows a server 10 for synchronizing a plurality of terminals according to an embodiment of the present invention. The server 10 may be implemented using any suitable hardware, software, and/or the combination of them to configure as desired. For example, the server 10 may include a processor, a storage medium readable by the processor, at least one input device, and at least one output device. The server may also include a transceiver to communicate with the terminals. A computer program may be stored in the storage medium that may implement or utilize the various techniques described herein.

More specifically, the server 10 includes a transmission/reception unit 101, a registration processing unit 103, a wait page generation unit 105, and a synchronized page generation unit 107.

The transmission/reception unit 101 is a network interface to connect to the terminals. The connection to the terminals may be a wireless connection or a wired connection. The transmission/reception unit 101 receives requests from the terminals and transmits the requested data such as web pages generated by the wait page generation unit 105 and the synchronized page generation unit 107 as described below.

The registration processing unit 103 receives and verifies a registration request from the terminal. For example, the registration processing unit 103 verifies a login name and a password against the list of authorized users. A registration request from an authorized user is accepted and a registration request from an unauthorized user is rejected.

The wait page generation unit 105 responds to the request from the terminal with a response including a refresh time. More specifically, the wait page generation unit 105 generates a wait page including a refresh time. The refresh time may be specified using a meta refresh tag such as <meta http-equiv="Refresh" content="[wait time in seconds]; URL=[path to the web page]">. Before the registration requests from all the expected terminals are received, the refresh time is set equal to a predetermined wait time RT. When the registration requests from all the expected terminals are received, the refresh time is calculated based on the difference between the last refresh time Tₗₐₛₜ(p) and a point in time TS determined by the server 10, where Tₗₐₛₜ(p) is the last point in time when the terminal 20_p (p=1, 2, 3, ... is a terminal number) has asked for a page refresh.

The synchronized page generation unit 107 also responds to the request from the terminal. The response may include a refresh time to have a sequence of pages displayed on the terminals. More specifically, the synchronized page generation unit 107 generates a web page in which the terminals can synchronously cooperate or be involved in a common goal. The web pages generated by the synchronized page generation unit 107 may be the same or different among the terminals.

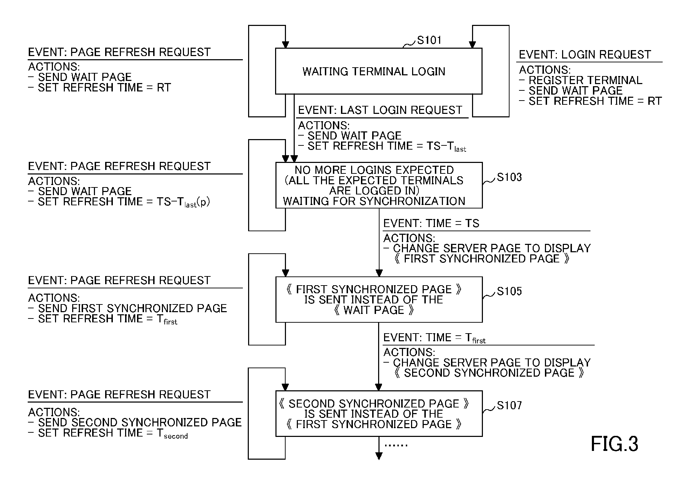

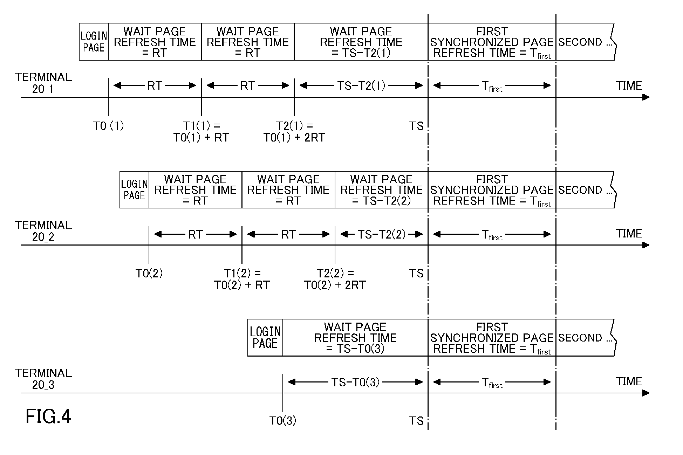

With reference Figs. 3 and 4, the operations in the server 10 are described in detail below.

Fig. 3 is a state transition diagram of a method of synchronizing the terminals 20_1, 20_2, and 20_3 in the server 10 and Fig. 4 is a time chart illustrating that the terminals 20_1, 20_2, and 20_3 are synchronized. It is assumed that the terminals 20_1, 20_2, and 20_3 are synchronized at a point in time TS determined by the server 10.

In order to get synchronized, the server 10 waits for each terminal 20_p (p=1, 2, 3 ...) to log into the server 10 (S101). The login page allows the terminal user to register himself as a participant. As shown in Fig. 4, when the user of the terminal 20_p inputs a login name and a password and presses an OK button at a point in time T0(p), the registration request is transmitted to the server 10. In this example, the terminals 20_1 and 20_3 log into the server at point in times T0(1) and T0(2), respectively.

When the registration request is accepted by the server 10, the server 10 responds to the registration request with a wait page including a refresh time. When the terminal 20_p receives the wait page, the wait page is displayed on the terminal's web browser. The wait page invites the user to wait until all the participants are registered. The refresh time of this wait page is set equal to a predetermined wait time RT, e.g. RT=2 seconds.

The terminal 20_p requests a page refresh after the lapse of the refresh time RT. When all the expected terminals are not logged in, the server 10 responds to the page refresh with a wait page including the same refresh time RT. In this manner, the wait page displayed on the terminal's web browser is periodically refreshed every RT seconds. As shown in Fig. 4, the terminal 20_p is refreshed at a point in time T0(p)+n*RT, where n is an integer. In this example, the wait page on the terminal 20_1 is refreshed at point in times T1(1)=T0(1)+RT, T2(1)=T0(1)+2RT, ... and the wait page on the terminal 20_3 is refreshed at point in times T1(2)=T0(2)+RT, T2(2)=T0(2)+2RT, ...

The period during which the wait page is periodically refreshed is called an "initialization phase". During the initialization phase, the requests from the terminals are not synchronized and depend on the point in time T0(p) when the registration request is transmitted.

When the server 10 receives the registration requests from all the expected terminals, the servers 10 starts synchronizing the terminals 20_p (S103). This phase is called a "synchronization phase". As shown in Fig. 4, when the last terminal 20_3 is registered at the point in time T0(3), the server 10 changes the refresh time so that each of the terminals 20_1, 20_2, and 20_3 requests a page refresh at the same point in time TS. The server 10 responds to the page refresh with a wait page including a refresh time calculated based on the point in time TS. The refresh time of the terminal 20_3 is set equal to TS-Tₗₐₛₜ, where Tₗₐₛₜ is a point in time of the last terminal (terminal 20_3 in this example) being logged in. The refresh time of each terminal 20_p is calculated by the server 10 based on the difference between the last refresh time Tₗₐₛₜ(p) and the point in time TS, where Tₗₐₛₜ(p) is the last point in time when the terminal 20_p has asked for a page refresh. In this example, the refresh time of the terminal 20_1 is calculated as TS-T2(1), where T2(1)=T0(1)+2RT, because the wait page of the terminal 20_1 has been refreshed twice. Similarly, the refresh time of the terminal 20_3 is calculated as TS-T2(2). Consequently, the terminals 20_1, 20_2, and 20_3 ask for a page refresh at the point in time after the lapse of the refresh time, which corresponds to TS and thus get synchronized. Since each of the terminals 20_p asks for a page refresh after the lapse of the refresh time calculated by the server, synchronization is achieved in a pull mode.

The point in time TS may be determined by the server 10 based on Tₗₐₛₜ and RT as follows.

The server 10 stores the login time T0(p) of each terminal 20_p, and thus stores the login time Tₗₐₛₜ=T0(n) of the last terminal being logged in. The point in time TS is greater than Tₗₐₛₜ+max(RT-(Tₗₐₛₜ-T0(i)) modulo RT), where i is an integer between 1 and n-1 and n is the number of terminals being logged in;

TS > Tₗₐₛₜ+max(RT-(Tₗₐₛₜ-T0(i)) modulo RT). For example, the point in time TS may be set equal to Tₗₐₛₜ+max(RT-(Tₗₐₛₜ-T0(i)) modulo RT)+2 seconds.

Alternatively, the server 10 may not store any login time. The point in time TS is just set to be greater than Tₗₐₛₜ+RT. For example, the point in time TS may be set equal to Tₗₐₛₜ+RT+2 seconds.

At the point in time TS, every terminal 20_p asks for a page refresh. Then, the server 10 can send a first page of the application to all the terminals in a synchronized manner or in a quasi-synchronized manner (S105). As shown in Fig. 4, all the terminals 20_1, 20_2, and 20_3 can be synchronized at the point in time TS and can be involved in the first synchronized page.

Having now a time reference common to all the terminals 20_p, the server 10 can continue using this common time reference to have a sequence of pages displayed on the terminals. For example, when the server 10 sends the first synchronized page including a refresh time T_{first} to the terminals 20_1, 20_2, and 20_3, the terminals 20_1, 20_2, and 20_3 ask for a page refresh at the point in time TS+T_{first}.

Similarly, the server 10 can send a second page of the application to all the terminals in a synchronized manner or in a quasi-synchronized manner (S107). For example, when the server 10 sends a second synchronized page including a refresh time T_{second} to the terminals 20_1, 20_2, and 20_3, the terminals 20_1, 20_2, and 20_3 ask for a page refresh at the point in time TS+T_{first}+T_{second}.

It should be noted that the server 10 can choose to send different pages to the terminals. In addition, the server can choose to send the same page or different pages to the terminals at different point in times. Having a common time reference does not prevent the server 10 from running an application specific to some users.

In the example shown in Figs. 3 and 4, it is assumed that the server knows the number of participants in advance. Alternatively, the number of participants may not be known in advance. The server may use a deadline for registration to calculate the refresh time of the last wait page. The deadline may be set earlier than the point in time TS or equal to the point in time TS. Before the deadline, the refresh time is set equal to a predetermined wait time RT. After the deadline, the refresh time is calculated based on the difference between the last refresh time Tₗₐₛₜ(p) and the point in time TS as described above.

According to the embodiment of the present invention, a plurality of terminals can be synchronized by setting an appropriate refresh time in a server. The principle of the present relies only on the basic browser features and thus does not have an impact on the terminals. More specifically, the solution described herein does not require setting up the browser of the terminal and its security rules to accept pushed pages. The solution relies only on the common pull mode access to a HTML browser. The solution does not need any application to be installed, any plugin or any script to be executed.

In addition, the solution does not require any change in the terminal clock setting. Thus, the solution can work independently of the time zone differences among terminals or between a terminal and a server.

The present invention can be applied to applications where a synchronization mechanism is necessary among terminals, for example, where several terminals running a web browser are cooperating or simply involved in a common goal. For example, the present invention can be applied to time-constrained survey, quiz and so on.

For convenience of explanation, the server according to the embodiment of the present invention have been described with reference to functional block diagrams, but the server may be implemented in hardware, software, or combinations thereof.

It is to be understood that numerous modifications may be made to the illustrative embodiments and that other arrangements may be devised as defined by the appended claims.

## Claims

1. A method of synchronizing a plurality of devices in a server, comprising:
receiving a first request from a first device (S101);
responding to the first request with a first response including a first refresh time, the first refresh time being calculated based on a first difference between a point in time when the first request is received and a point in time determined by the server (S101, S103);
receiving a second request from a second device (S101); and
responding to the second request with a second response including a second refresh time, the second refresh time being calculated based on a second difference between a point in time when the second request is received and the point in time determined by the server (S101, S103).

2. The method according to claim 1, further comprising sending a first page of an application to the first and second terminals, the first page being displayed on the first and second devices after the lapse of the first and second refresh times, respectively (S1 05).

3. The method according to claim 1 or 2, wherein the first and second refresh times are calculated based on the first and second differences respectively after a predetermined deadline, and the first and second refresh times are set equal to a predetermined wait time before the predetermined deadline.

4. The method according to claim 1 or 2, wherein if a number of devices accessing the server reaches a predetermined threshold, the first and second refresh times are calculated based on the first and second differences respectively, otherwise, the first and second refresh times are set equal to a predetermined wait time.

5. The method according to claim 4, wherein if the number of devices accessing the server reaches the predetermined threshold, the first and second refresh times are calculated according to TS-Tₗₐₛₜ(p), where TS is the point in time determined by the server and Tₗₐₛₜ(p) is a last point in time when a device p is refreshed.

6. The method according to claim 3 or 4, wherein the point in time is determined based on a point in time when a last terminal logs into the server and the predetermined wait time.

7. The method according to any one of claims 1 to 6, wherein the first or second response is a HTML (Hypertext Markup Language) page including a meta refresh tag with the first or second refresh time.

8. A server (10) for synchronizing a plurality of devices (20_1, 20_2, 20_3); comprising:
a reception unit (101) configured to receive a first request from a first device (20_1, 20_2, 20_3) and receive a second request from a second device (20_1, 20_2, 20_3); and
a response unit (101, 103) configured to respond to the first request with a first response including a first refresh time and respond to the second request with a second response including a second refresh time;
wherein the first refresh time is calculated based on a first difference between a point in time when the first request is received and a point in time determined by the server and the second refresh time is calculated based on a second difference between a point in time when the second request is received and the point in time determined by the server.

9. A system for synchronizing a plurality of devices; comprising:
a first device (20_1 , 20_2, 20_3) configured to transmit a first request;
a second device (20_1, 20_2, 20_3) configured to transmit a second request; and
a server (10) configured to receive the first request from the first device and receive the second request from the second device, and to respond to the first request with a first response including a first refresh time and respond to the second request with a second response including a second refresh time;
wherein the first refresh time is calculated based on a first difference between a point in time when the first request is received and a point in time determined by the server and the second refresh time is calculated based on a second difference between a point in time when the second request is received and the point in time determined by the server.
